# EUROPEAN PATENT APPLICATION

(11) **EP 1 008 763 A1**
(43) Date of publication of application: **14.06.2000**
(21) Application number: 98870268.4
(22) Date of filing: 10.12.1998
(51) Int. Cl.: F04F 7/00

(54) **Compressor using the kinetic energy of the wave generated by opening the inlet valve**

(71) Applicant: S.C. NDR Management S.r.l., Constanza (RO)
(72) Inventor: De Vadder, Paul Alfons Dominique, Vaduz (LI); De Bock, Guido Prosper Richienne, 2440 Geel (BE); Allaert, Hendrik Marie Marcel Eduard, 9100 Sint-Niklaas (BE)
(74) Representative: Van Straaten, Joop

(57) **Abstract**

A device for generating an increased pressure has a first (1) and a second (5) valve and a gas inlet (I) for letting in a gas. An overpressure room is situated behind the fist valve in which overpressure room a movable element (4) is present. Opening the first valve creates an overpressure in the overpressure room which moves the movable element due to a shock wave generated near the movable element. Before this shock wave is returned and exits the overpressure room the second valve is closed. Thereafter the movable element (4) moves back to it's original position.

## Description

The invention relates to a device for generating increased pressures in a gas having an inlet and an outlet.
Such devices are known. Using pumps it is possible to increase the pressure of a gas. The pumping speeds as well as the amount of compression obtainable with known pumps is however limited. In order to obtain high pressure several pumps must be put in succession and each compression step takes up space and costs energy. There exist some devices using a wave effect but the intention of this invention is to obtain the maximum efficiency of this effect with gases. In circumstances where a large pressure has to be reached but only little room is available and energy efficiency is of prime importance, there are considerable problems. In such circumstances, but also in other circumstances, the problems are compounded by the fact that in compressing the gas the temperature of the gas is raised and energy is lost by the aftercooling of each step. Our proposal is to deliver cooled gases to the outlet which may be coupled to a collecting vessel.

To this end the device in accordance with the invention is characterised in that
the device comprises a first and second valve and a gas inlet for letting in a gas, said first valve opening in operation to let the gas into an overpressure room formed behind the opening of the first valve and a movable element in the overpressure room, whereby an increased pressure is built in the overpressure room moving the movable element, whereafter the second valve, that functions in the same time as piston of compression of the back gases, closes the way in the canal of the first valve. By this two objectives are obtained:
- Compression of the gases at the back of the wave
- To open the contact with the outlet canal of the overpressured gases, through a one way valve. This way the evacuation of the overpressured gases is permitted by a counter reaction piston that establishes the necessary equilibrium in pressure levels.

In this manner A simple and reliable manner to increase the pressure so that less steps are needed is accomplished by increasing the speed of the entering gas, compressing it at a first step by a front shock generating a considerable increase of pressure and conserving a large part of this pressure by compressing the gas that came in the chamber. By compressing this back part of the gases the pressure is re-established so that the effect of overcompressing will be completed as explained hereafter.

This invention is based on the insight that it is possible to use advantageously a wave effect known as the Ariette wave. Such an effect occurs when a moving fluid hits a wall and increases considerably the pressure in liquids and gases. In the case of gases, however this effect is accompanied by a very quick succession of compression - expansion movements of the gas.

The invention has realised that, despite this the effect can be advantageously used to enable an over-compression of gases. To this end the device comprises a first and second valve and a gas inlet for letting in a gas, whereby a pressure builds up at the shock against the movable element, for instance a counter reaction piston, due to the kinetic energy of the gas, whereby an increased pressure is built in the said room and a movable element is moved. Thereafter the second valve closes the entrance canal in the first valve and in the same time compresses the rest gases at the back of the wave and opens to let the compressed gas into an outlet, the movable element moving back. The invention enables to eliminate some stages of mechanical compressing rooms and cools in the same time the compressed gases in such a way that they arrive cold at the outlet to a high-pressure vessel.

It is remarked that for liquids and in mechanic of liquids the effect of Ariette is well known. Devices are made to neutralise this effect, others to use this particularity, for example special water pumps that go to 130 meters height or higher.
In the field of pneumatics there exist also some devices using the Ariette wave, but they do not use a movable element (e.g. a counter reaction piston) co-ordinated with a compressing-closing and opening mechanism, all included in one device.

In contrast to liquids, however, gases are compressible media, which amongst others has a consequence that compression means a raise in temperature in gas, whereas in liquid this is not the case. Also the velocities of the Ariette wave are completely different in gas than in liquids. Waves in liquids typically travel at speeds several orders of magnitude smaller than corresponding speeds in gases. In the device according to the invention the movement of the valves is synchronised with the reduction of the volume of the gases provoking a high compression in a very short moment and much faster than in the case of liquids. Preferably means for cooling the gases are provided. Preferably the inlet of the device according to the invention is coupled to a device for increasing pressure. The effect on which the invention is based can be most efficiently used when the gas is already at increased pressure (in respect of normal pressure of approximately 1 bar) at the inlet of the device.

Depending on the compressing level, the velocity and the temperature of the gases, the mode of input coupled with the form of the room, the opening and closing speed of the valves, the effect of overcompression can be varied, but is preferably very high.

The present invention enables to realise compression rates in the range of 1:6,5.

These and further aspects will be further explained and illustrated by means of the figures in which a preferred embodiment of the device is schematically shown.

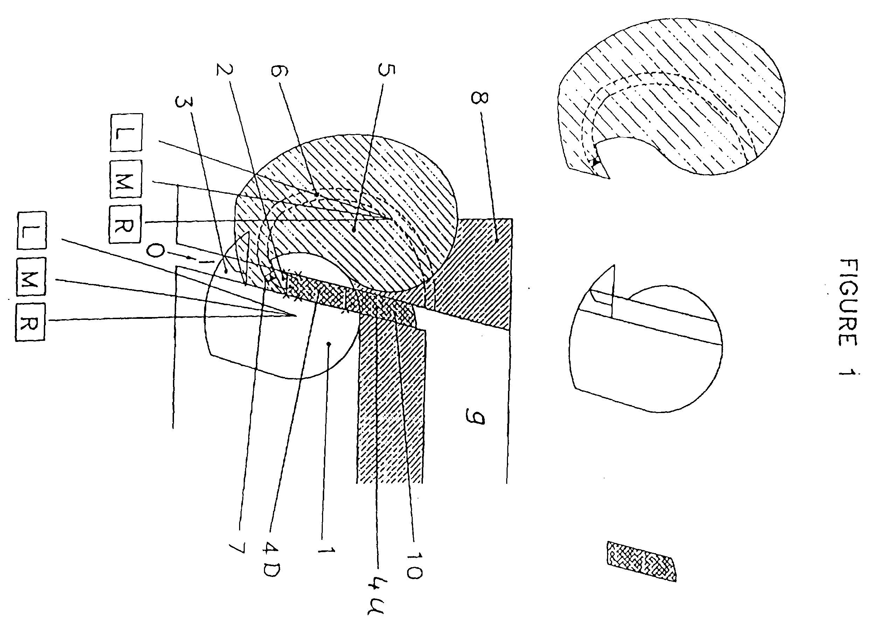

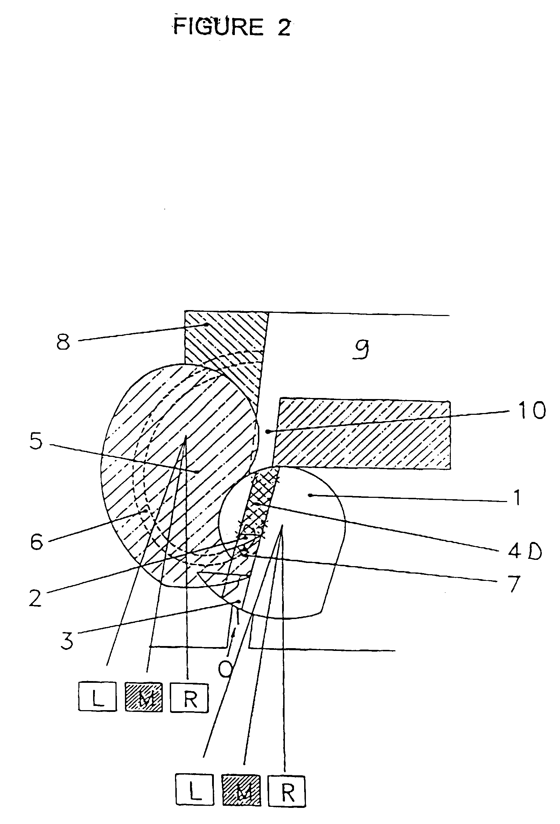

Figure 1 shows schematically a median transversal section of a device in accordance with the invention. The other figures 2 to 7 illustrate 6 consecutive phases of the overcompression.

A compression room of a compressor has an outlet O, which also forms an inlet I for the device according to the invention. The device comprises several elements:
- An eccentric element (1), which comprises a canal inside (2). In this canal the part towards the inlet I comprises an asymmetric venturi pipe (3). This element forms the first valve.
- A free piston (4); also called the counter reaction piston
- A second eccentric element (5) with also a canal (6) inside. Inside this canal there is a one way valve (7).
- A separation wall (8) with the high-pressure vessel (9). Inside this separation wall there is a canal (10)

The eccentric elements (1) en (5) can have three positions (Left (L), Middle (M), Right (R)) and the free piston (4) has two extreme positions (Up (U) and Down (D)), schematically indicated as e.g. 1L, 5R, 4D, etc. in which:
1R is the position of eccentric element (1) in which the internal canal (2) is in line with the entry (I) and fixed canal (10)
1L is the position of eccentric element (1) in which the internal canal (2) is not in line with (I) and (10)
5R is the position of eccentric element (5) in which it is blocking the entrance (I) of canal (2) and with canal (6) in line with the outlet to canal (10) and the high-pressure vessel (9)
5L is the position of eccentric element (5) in which it leaves inlet (I) of canal (2) open and blocks the outlet of canal (6) to high-pressure vessel (9)
4U is the upper position of free piston (4) inside fixed canal (10)
4D is the lower position of free piston (4) inside canal (2) inside eccentric element (1)

It is remarked that the positions are given for explanatory purposes, whether or not positions are to the left or the right (or up or down) depends on the point of view.

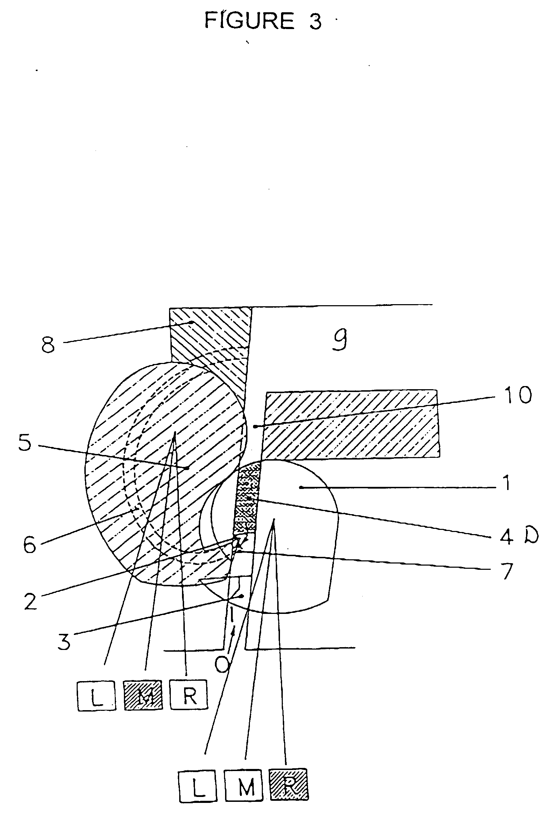

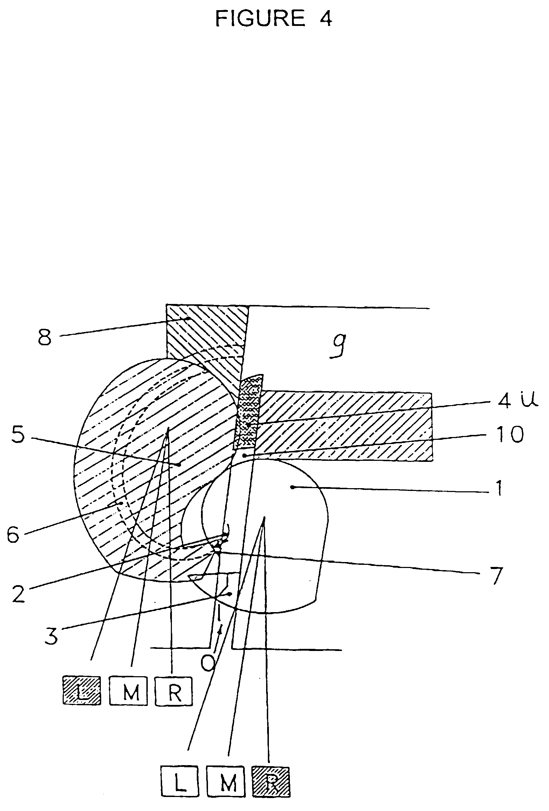

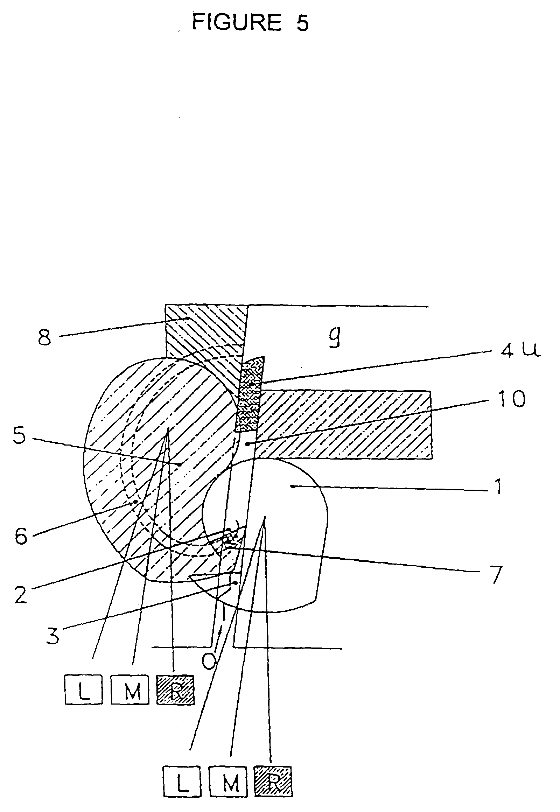

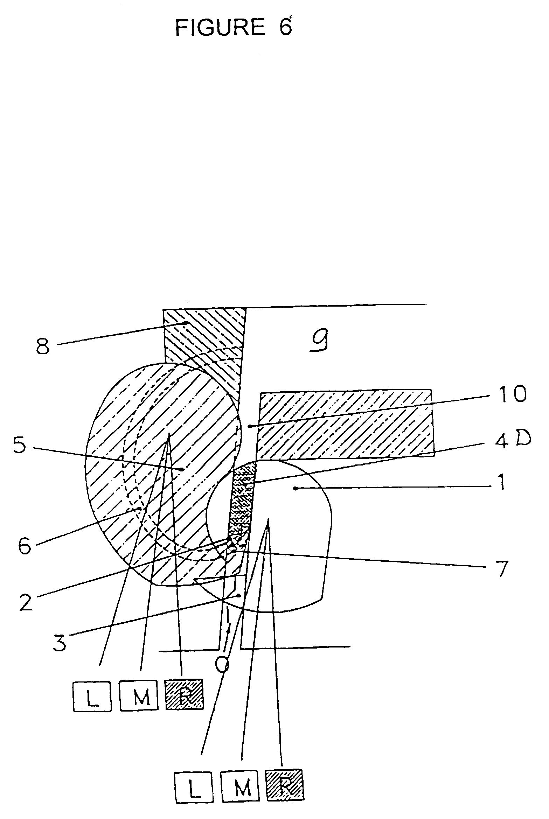

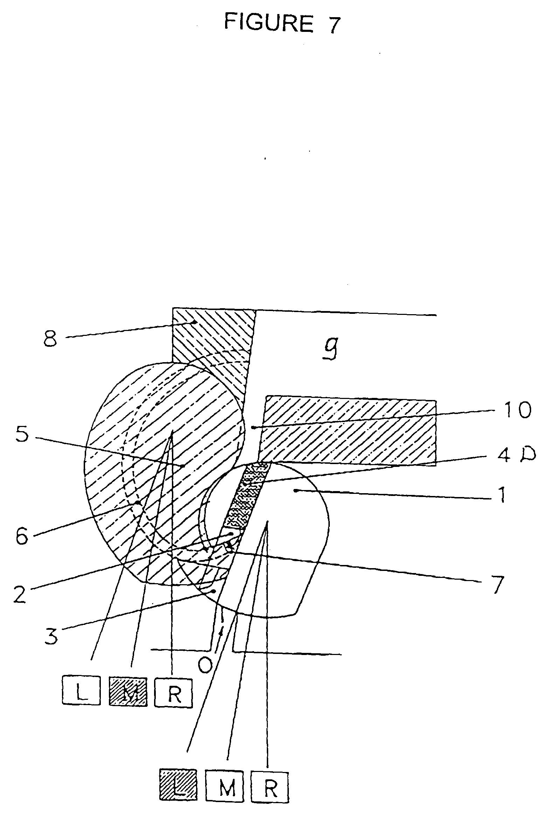

The compression cycle comprises the following phases:
Phase 1 (Figure 2): when the rotor starts its compression, the compression room is hermetically sealed. At this point the piston (4) is inside the eccentrically moving element (1). The positions are 1M, 5M and 4D.
Phase 2 (Figure 3): once the pressure in the compression room C reaches a certain pressure, eccentric element (1) will move to position 1R. The air can still not move out of the compression room, because position 5M is still obstructing the asymmetric venturi pipe 3.
Phase 3 (Figure 4): Canal (2) and (10) are in line now and eccentric element (5) moves to position 5L and forms no more obstruction inside canal (2), at which position an open valve is formed to let the compressed air from the inlet I be released inside the canal (2). This gas hits the piston (4), which moves inside canal (10), until it is stopped by the pressure of vessel (9) inside canal (10) at position 4U. Meanwhile the outlet canal (6) to the pressure vessel (9) is hermetically closed.
Phase 4 (Figure 5): eccentric element (5) moves to position 5R inside eccentric element (1), blocking completely canal (2). The air is trapped inside this canal and the kinetic energy is transformed into overpressure.
Phase 5 (Figure 6): After equilibration the pressure in vessel (9) pushes the free piston (4) down. During this phase the piston (4) acts as a counterreaction piston. Due to overpressure in canal (2), the air flows through canal (6) to the high-pressure vessel.
Phase 6 (Figure 7): The free piston (4) is inside eccentric (1) and both eccentric elements 1 and 5 move to the positions 1L and 5M thus closing the inlet to canal (2).

In this manner an increase in pressure (also called overcompression effect) is obtainable.

The realisation of a sizable overcompression effect is subject to following considerations:

The relation of the volume of the cylindrical overcompression room, in this example canal (2) (= the volume of the fluid caught for increase of pressure) to the length of it is important, in such a way that the compressed fluid, once released into the overcompression room (2) (phase 3), hits the opposite wall (of piston (4)) in a very short time (t₁), corresponding with the closure of the entrance of the canal by eccentric (5), without any significant loss of pressure due to mechanical losses.

On the other hand the mass of the fluid caught inside the overcompression room (2) must be substantial enough to realise the overcompression, thus requiring considerable values of inlet pressure (P₁) and inlet velocity (v₁). In order to reach such high velocity it is preferred to increase the inlet velocity by means of a convergent adjustment, keeping in mind the losses of charges in such a device. In the example an asymmetrical cone (3) is used in order to optimise (= minimize) opening and closing times of the inlet of canal (2) by eccentric element (5).

At the moment that the gases hit the moving wall of piston (4) the velocity is reduced to 0 resulting in a considerable overpressure wave originated at that wall and moving back toward the entrance of canal (2). That entrance is closed by eccentric (5) before the overpressure wave comes back which would reduces the desired effect.

Closing the entrance of canal (2) means also adjusting the volume of the overcompression room to accommodate it to the requested outlet pressure (P₂). Velocity of closure and adjustment of the volume are important because a gas is a compressible medium (the same operation in a non-compressible fluid would be less critical).

The overpressure reached when the gas hits piston 4 must be at least double of the outlet pressure (P₂) that has to be reached.

The same overcompression effect could be realised starting from a pressure vessel with compressed air at pressure P₀, provided that the volume of this pressure vessel is large enough in relation with the overpressure room, and that the pressure P₁ and velocity v₁ after the cone 3 are sufficiently high.

The overpressure device shown in the figures is preferably coupled to the outlet O of a centrifugal compressor and functions as well as its outlet valve. It comprises two eccentrics element with canals inside who, due to their special shapes and relative positions, can open and close those canals to form the first and second valve and regulate their volume.

A conical convergent adjustment is made in the inlet of the device in accordance with the invention to increase the speed of the gases. In this example it is done in such a way that its angular value is close to 12 degrees and that the shape increases the speed in order to obtain increased values for instance values of 377 m/s.

At such a speed it is preferred to close the inlet in 1/2000 of a second to permit the free piston (4) to compensate the space of the gases excitated by Ariette effect. This operation has to be done in synchronism with the speed of the expanding gases. The canal and the length are shaped in proportion of the flow, compression, etc..

Preferably mechanical movements and dimensions are adjusted to a high precision of for instance 1/600 of a mm to obtain the required hermetically sealed space. Preferably special sintered material is used. There is also a need to dissipate a large amount of heat generated in a small area to obtain efficient compression. For the dissipation of the generated heat, heat pipes or such can be used.

For the movements of the eccentrics VCM motors can be used.

The first eccentric valve (1) has an alternating rotational movement. It is preferably composed of sintered materials with boundary lubrication, which is obtained by adding e.g. an additive on the basis of MoS₂ (Molybdene Bisulphite) to the sintered material.

It has in its transversal part a conduct for the outlet gases and a compensated room with a variable geometry coming from the second eccentric. Adjusting in order to obtain hermetic closing on both eccentrics is very precise. Finally in the conduct to the outlet there is a free piston that moves inside and out of the eccentric and in the static accumulation room of high pressure. The second end of this piston is strictly adjusted in the prolongation of the outside cylinder, when the gases are subject to the Ariette effect.

But in the counter pressure phase (return phase of the piston) the same piston comes back to its initial position without losses of compensation of the high pressure, because the head of the piston stays on the external perimeter of the axe of the first eccentric. This eccentric is then free for its sequential rotation securing in the same time all hermetic closing.

Finally a classic one way valve located in the outlet conduct, included in the second eccentric, allows the evacuation of the compressed air at high pressure.

## Claims

1. Device for generating increased pressures having an inlet and an outlet, characterized in that the device comprises a first (1) and second valve (5) and a gas inlet (I) for letting in a gas, said first valve opening in operation to let the gas into an overpressure room formed behind the opening of the first valve and a movable element in the overpressure room whereby an increased pressure is built in the overpressure room, whereafter the second valve closes the inlet of the first valve, compresses the back gasses and opens the way to the outlet, permitting to the movable element a return movement.

2. Device as claimed in claim 1, characterized in that the device comprises an eccentrically moving element forming the first valve wherein a movable piston in an overpressure room is present.

3. Device as claimed in claim 1 and 2, characterised in that the device comprises a second eccentrically moving element, forming the second valve and a second piston when closing the inlet of the gases, wherein an outlet channel towards the overpressure room is formed, the movements of the first and second eccentrically moving elements being synchronised.

4. Device as claimed in claim 2 or 3 characterised in that the movements of the first and second eccentrically moving elements are synchronised to the movement of the movable element.

5. Device as claimed in claim 2, 3 or 4, characterised in that the first and/or second eccentrically moving element and/or the piston are made of sintered material.

6. Device as claimed in any of the preceding claims, characterised in that the inlet of the device comprises a restriction.
